Europäisches Patentamt

European Patent Office

Office européen des brevets

(19)

(11) Veröffentlichungsnummer : **0 201 662**
**B1**

(12) EUROPÄISCHE PATENTSCHRIFT

(45) Veröffentlichungstag der Patentschrift :
23.03.88

(51) Int. Cl.⁴ : **B 25 D 17/08**

(21) Anmeldenummer : **86100970.2**

(22) Anmeldetag : **24.01.86**

(54) Bohrfutter für drehschlagendes oder drehendes Bohren.

(30) Priorität : **08.05.85 DE 3516451**

(43) Veröffentlichungstag der Anmeldung :
**20.11.86 Patentblatt 86/47**

(45) Bekanntmachung des Hinweises auf die Patenterteilung : **23.03.88 Patentblatt 88/12**

(84) Benannte Vertragsstaaten :
**CH FR GB IT LI**

(56) Entgegenhaltungen :
**EP-A- 0 194 426**
**FR-A- 2 364 744**
**US-A- 1 387 493**
**US-A- 1 812 652**
**US-A- 1 982 278**
**US-A- 2 432 144**
**US-A- 2 837 341**

(73) Patentinhaber : **Röhm, Günter Horst**
**Heinrich-Röhm-Strasse 50**
**D-7927 Sontheim (DE)**

(72) Erfinder : **Röhm, Günter Horst**
**Heinrich-Röhm-Strasse 50**
**D-7927 Sontheim (DE)**

(74) Vertreter : **Fay, Hermann, Dipl.-Phys. Dr.**
**Ensingerstrasse 21 Postfach 1767**
**D-7900 Ulm (Donau) (DE)**

**Beschreibung**

Die Erfindung betrifft eine Schlagbohreinrichtung mit einem von einer Bohrspindel antreibbaren Bohrfutter, das einen axialen Durchgang aufweist, durch den hindurch die Schlagwirkung eines in der hohlen Bohrspindel axial geführten Döppers auf das Ende des im Bohrfutter zwischen zentrisch durch einen Stellring verstellbaren Futterbacken gehaltenen Bohrers übertragbar ist, wobei zur drehschlüssigen Verbindung des Bohrfutters mit der Bohrspindel zumindest ein Kupplungsglied vorgesehen ist, das formschlüssig in Kupplungsaufnahmen einerseits der Bohrspindel, andererseits des Futterkörpers greift und dem Futterkörper auf der Bohrspindel ein axiales Verschiebungsspiel ermöglicht, das durch eine mindestens ein Sperrglied aufweisende Verriegelungsvorrichtung mit einem Kupplungsring ein- und ausschaltbar ist, wozu das Sperrglied durch den axial verschiebbaren und gegen Drehung feststellbaren Kupplungsring betätigbar ist und in zur Futterachse radialer Richtung in jeweils eine Sperrausnehmung verstellbar ist, wobei ferner der Kupplungsring an seinem dem Stellring zugewandten Rand mit Zähnen versehen ist, die bei axial bohrerseitiger Stellung des Kupplungsringes in eine zugeordnete Gegenverzahnung des Stellrings eingreifen, und wobei zwischen dem Futterkörper und dem Kupplungsring eine auf der Bohrspindel befestigte Anschlaghülse angeordnet ist, die an ihrer inneren Umfangsfläche einen Federring trägt, der radial in eine Ringnut des Futterkörpers vorsteht und einen das axiale Verschiebungsspiel begrenzenden Anschlag für die beiden Seitenflächen der in der Breite dem Verschiebungsspiel angepaßten Ringnut bildet.

Bei der Schlagbohreinrichtung nach der EP-A-0 194 426, die dem Stand der Technik gemäß Art. 54 (3) angehört, ist das Sperrglied eine Kugel, die radial durch den Kupplungsring verstellbar in einer Ausnehmung der Anschlaghülse geführt ist. In der axial bohrspindelseitigen, das Verschiebungsspiel des Bohrfutters auf der Bohrspindel ausschaltenden Stellung drückt der Kupplungsring die Kugel als zweiten Anschlag in die Ringnut des Futterkörpers, so daß die Kugel an der einen Seite, der an der Anschlaghülse feste Federring an der anderen Seite der Ringnut anliegt und sich der Futterkörper also axial nicht mehr gegenüber der an der Bohrspindel festen Anschlaghülse verstellen kann. — Der von der Kugel gebildete Anschlag an der Nutseitenwand ergibt nur eine punktförmige Anlage mit entsprechend hoher Flächenpressung und der Gefahr von Werkstoffverformungen. Dadurch kann sich die durch die Kugel bewirkte axiale Verriegelung und Verspannung zwischen dem Bohrfutter und der Anschlaghülse leicht lockern, was beim rein drehenden Bohren sehr stören kann.

Der Erfindung liegt die Aufgabe zugrunde, eine Schlagbohreinrichtung nach der eingangs genannten Patentanmeldung EP-A-0 194 426 so weiter auszubilden und zu verbessern, daß eine gute form- und kraftschlüssige Verbindung zwischen dem Futterkörper und der Anschlaghülse zur sicheren Ausschaltung des axialen Futterspiels auf der Bohrspindel hergestellt werden kann.

Diese Aufgabe wird nach der Erfindung dadurch gelöst, daß die Sperrausnehmung als ein Ringfalz an der Außenseite der Anschlaghülse ausgebildet und eine am Futterkörper zumindest axial festgelegte Sperrhülse vorgesehen ist, die sich von der Bohrerseite des Bohrfutters her in den Ringraum zwischen der Anschlaghülse und dem Kupplungsring erstreckt und mindestens eine zur Bohrspindel hin vorstehende Sperrzunge aufweist, welche an der Innenseite das als radiale Sperrnase ausgebildete Sperrglied trägt und in der axial bohrspindelseitigen Stellung des Kupplungsringes in radial einwärts bewegter Stellung mit im Ringfalz aufliegender Sperrnase gehalten und in der axial bohrerseitigen Stellung des Kupplungsringes radial auswärts bis zur Freigabe des Ringfalzes durch die Sperrnase bewegbar ist. Die Sperrzunge ist vorzugsweise in dreifacher, gleichmäßig über den Bohrfutterumfang verteilter Anordnung vorgesehen, so daß diese Sperrzungen gemeinsam in Verbindung mit dem sie verstellenden Kupplungsring gleichsam eine an der Anschlaghülse angreifende Spannzange bilden, die eine sichere form- und kraftschlüssige Verbindung zwischen der Anschlaghülse einerseits und der Sperrhülse bzw. dem mit der Sperrhülse axial fest verbundenen Futterkörper andererseits ergibt.

Eine bevorzugte Ausführungsform der Erfindung ist dadurch gekennzeichnet, daß die Sperrzunge als aus der Sperrhülse freigeschnittene, radial auswärts elastisch vorgespannte Federzunge ausgebildet ist und einem Stellvorsprung des Kupplungsringes anliegt. Zweckmäßig ist die an der Sperrnase zur Anlage kommende Ringfläche etwa als Kegelfläche ausgebildet und die ihr zugeordnete Anlagefläche der Sperrnase entsprechend dem Kegelwinkel abgeschrägt. Dadurch besteht die Möglichkeit, daß sich die von den Sperrzungen und ihren Sperrgliedern gebildete Spannzange über die keil- bzw. kegelförmigen Anlageflächen besonders vorteilhaft zu verspannen vermag.

In weiterer Ausbildung der Erfindung empfiehlt es sich, zwischen der Sperrhülse und dem Kupplungsring einen Ringraum vorzusehen, in dem eine den Kupplungsring in die axial bohrerseitige Stellung bewegende Feder angeordnet ist, die axial zwischen einer Ringschulter des Kupplungsringes und einem Stützring der Sperrhülse eingesetzt ist, und die — wie schon beim Gegenstand des Hauptpatentes, — den Kupplungsring im Eingriff am Stellring hält. Die Stellvorsprünge sind vorzugsweise durch einen in eine Ringnut des Kupplungsrings eingelegten Federring gebildet. Der Kupplungsring kann dann über den Stützring und den die Stellvorsprünge bildenden Federring an der Sperrhülse geführt sein.

Im folgenden wird die Erfindung an einem in der Zeichnung dargestellten Ausführungsbeispiel näher erläutert ; es zeigen :

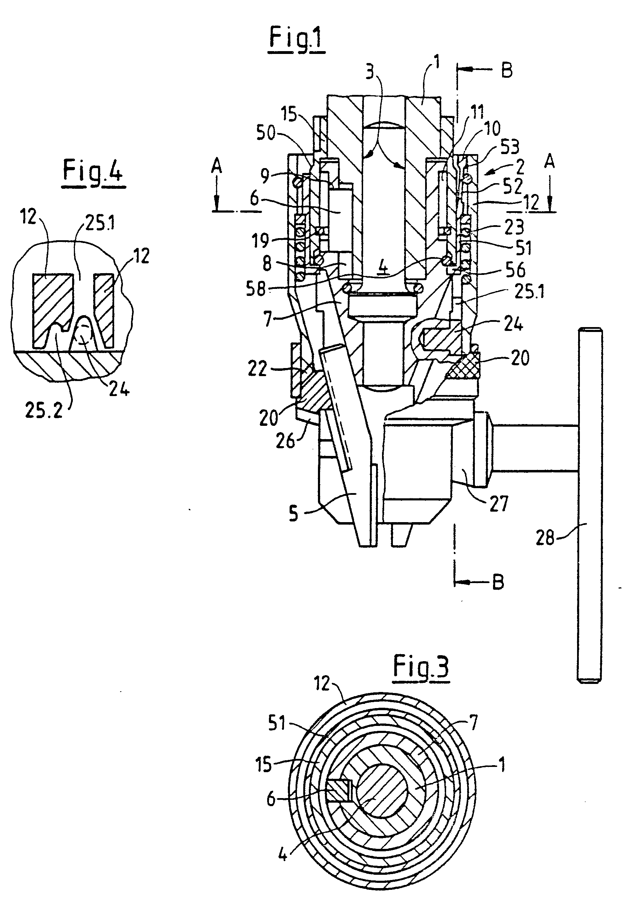

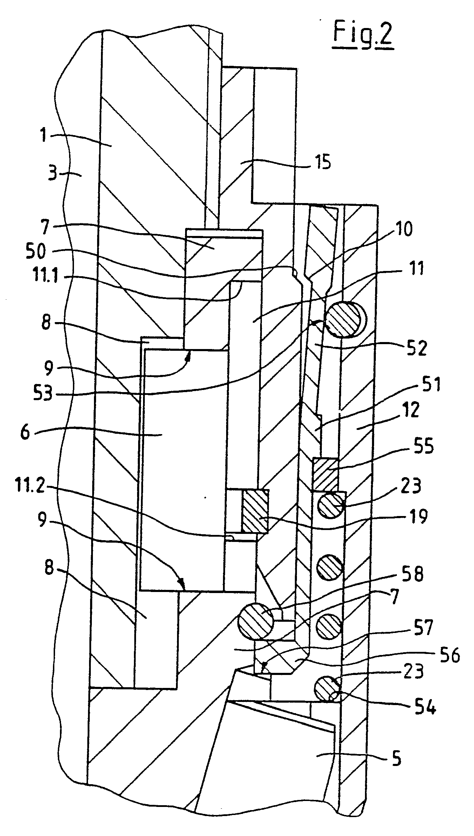

Fig. 1 eine Schlagbohreinrichtung nach der Erfindung in einem Axialschnitt, teils in einer Seitenansicht,

Fig. 2 einen im wesentlichen das Sperrglied darstellenden, vergrößert gezeichneten Ausschnitt aus Fig. 1, und zwar bei das axiale Verschiebungsspiel des Bohrfutters auf der Bohrspindel ermöglichender Stellung,

Fig. 3 einen Querschnitt durch die Schlagbohreinrichtung nach Fig. 1 in Richtung A-A,

Fig. 4 einen Schnitt in Richtung B-B in Fig. 1, und zwar in der Betriebsstellung der Schlagbohreinrichtung mit eingeschaltetem Verschiebungsspiel des Bohrfutters auf der Bohrspindel.

Die in der Zeichnung dargestellte Schlagbohreinrichtung besteht aus einer nur teilweise dargestellten Bohrspindel 1, die drehschlüssig ein Bohrfutter 2 antreibt. Dieses Bohrfutter 2 besitzt einen axialen Durchgang 3, durch den hindurch die Schlagwirkung eines in der hohlen Bohrspindel axial geführten und ebenfalls nur teilweise dargestellten Döppers 4 auf das Ende eines im Bohrfutter 2 zwischen von einem Stellring 20 zentrisch verstellbaren Futterbacken 5 gehaltenen, in der Zeichnung nicht dargestellten Bohrers übertragbar ist. Zur drehschlüssigen Verbindung des Bohrfutters 2 mit der Bohrspindel 1 sind Kupplungsglieder 6 vorgesehen, die in Drehrichtung formschlüssig in am Futterkörper 7 und an der Bohrspindel 1 vorgesehene Kupplungsaufnahmen 8, 9 greifen. Diese ermöglichen dem Bohrfutter 2 auf der Bohrspindel 1 ein axiales Verschiebungsspiel, das durch eine mindestens eine Sperrnase 10 aufweisende Verriegelungsvorrichtung mit einem Kupplungsring 12 ein- und ausschaltbar ist, wozu die Sperrnase 10 durch den axial verschiebbaren und gegen Drehung feststellbaren Kupplungsring 12 betätigt werden kann und dabei in zur Futterachse radialer Richtung in einen Ringfalz 50 verstellbar ist. Der Kupplungsring ist an seinem dem Stellring zugewandten Rand mit Zähnen versehen, die bei axial bohrerseitiger Stellung des Kupplungsringes 12 in eine zugeordnete Gegenverzahnung 22 des Stellrings 20 eingreifen und unbeabsichtigte Verdrehungen des Stellrings verhindern. Zwischen dem Futterkörper 7 und dem Kupplungsring 12 ist eine auf der Bohrspindel 1 mit einem Gewindebund aufgeschraubte Anschlaghülse 15 angeordnet, die an ihrer inneren Umfangsfläche einen Federring 19 trägt, der radial in eine Ringnut 11 des Futterkörpers 7 vorsteht. Dieser Federring 19 bildet einen Anschlag für die beiden Seitenflächen 11.1, 11.2 der in der Breite dem Verschiebungsspiel angepaßten Ringnut 11. Der Ringfalz 30 ist an der Außenseite der Anschlaghülse 15 ausgebildet. Weiter ist eine am Futterkörper 7 axial festgelegte Sperrhülse 51 vorgesehen, die mit einem bohrerseitigen Ringbund 56 in einem Ringfalz 57 des Futterkörpers sitzt und darin durch einen am Futterkörper eingerasteten Federring 58 gehalten ist. Diese Sperrhülse 51 erstreckt sich von der Bohrerseite des Bohrfutters, also von ihrem Ringbund her in den Ringraum zwischen der Anschlaghülse 15 und dem Kupplungsring 12. Sie trägt drei über den Umfang des Bohrfutters gleichmäßig verteilt angeordnete, zur Bohrspindel 1 hin vorstehende Sperrzugen 52, welche an der Innenseite die radial einwärts vorstehenden Sperrnasen 10 tragen. In der axial bohrspindelseitigen Stellung des Kupplungsringes 12 sind die Sperrzungen 52 in radial einwärts bewegter Stellung mit im Ringfalz 50 aufliegenden Sperrnasen 10 gehalten. Dies entspricht dem Betriebszustand mit ausgeschaltetem Verschiebungsspiel des Bohrfutters auf der Bohrspindel. In der axial bohrerseitigen Stellung des Kupplungsringes 12 dagegen, wie sie in der Zeichnung dargestellt ist, sind die Sperrzungen 52 radial auswärts bis zur Freigabe des Ringfalzes 50 durch die Sperrnase 10 bewegbar. Die Sperrzungen 52 sind als aus der Wand der Sperrhülse 51 freigeschnittene, radial auswärts elastisch vorgespannte Federzungen ausgebildet und liegen aufgrund dieser Vorspannung je einem Stellvorsprung 53 des Kupplungsringes 12 an. Die an der Sperrnase 10 zur Anlage kommende Ringfläche des Ringfalzes 50 ist etwa als Kegelfläche ausgebildet und die ihr zugeordnete Anlagefläche der Sperrnasen 10 entsprechend abgeschrägt. Weiter ist zwischen der Sperrhülse 51 und dem Kupplungsring 12 ein Ringraum vorgesehen, in dem eine den Kupplungsring 12 in die axial bohrerseitige, also das axiale Verstellspiel des Bohrfutters freigebende Stellung bewegende Feder 23 angeordnet. Diese Feder 23 ist axial zwischen einer Ringschulter 54 des Kupplungsringes 12 und einem Stützring 55 der Sperrhülse 51 eingesetzt. Die Stellvorsprünge 53 sind durch einen in eine Ringnut des Kupplungsringes 12 eingelegten Federring gebildet. Dieser Federring kann zusammen mit dem Stützring 55 den Kupplungsring 12 an der Sperrhülse 51 führen.

Im Schlagbohrbetrieb steht der Kupplungsring 12 in seiner in der Zeichnung wieder gegebenen, axial bohrerseitigen Stellung, in der er den Stellring 20 für die Betätigung der Futterbacken 5 verriegelt, da der Kupplungsring in dieser Stellung durch einen am Futterkörper festen Anschlagkopf 24 undrehbar festgehalten wird, der in eine auf der Wandinnenseite des Kupplungsringes vorgesehene Axialnut 25.1 greift. Wird der Kupplungsring 12 gegen die Kraft der Feder 23 axial zurückgeschoben und soweit verdreht, daß der Anschlagkopf 24 in die Nut 25.2 des Kupplungsrings eintritt, wird der Kupplungsring 12 durch den Anschlagkopf 24 axial in einer Stellung festgehalten, in der der Kupplungsring 12 am Stellring 20 nicht im Eingriff steht, so daß der Stellring von Hand oder mittels des Schlüssels 28 verdreht werden kann, der über ein Ritzel 27 in üblicher Weise in eine Kegelverzahnung 26 des Stellrings greift. In dieser axial zurückgeschobenen Stellung des Kupplungsringes 12 drücken aber auch die Stellvorsprünge 53 die Sperrzungen 52 radial einwärts, so daß die Sperrnasen 10 den Ringfalz 50 übergreifen und dadurch jegliches axiales Verschiebungsspiel des Futterkörpers auf der Bohrspindel ausschalten können. Die Anordnung ist dabei im einzelnen so getroffen, daß in diesem Zustand, also bei von den Sperrnasen 10 übergriffenem Ringfalz 50, der Federring 19 gerade an der bohrerseitigen Seitenwand 11.2 der Ringnut 11 anliegt.

**Patentansprüche**

1. Schlagbohreinrichtung mit einem von einer Bohrspindel (1) antreibbaren Bohrfutter (2), das einen axialen Durchgang (3) aufweist, durch den hindurch die Schlagwirkung eines in der hohlen Bohrspindel (1) axial geführten Döppers (4) auf das Ende des im Bohrfutter (2) zwischen zentrisch durch einen Stellring (20) verstellbaren Futterbacken (5) gehaltenen Bohrers übertragbar ist, wobei zur drehschlüssigen Verbindung des Bohrfutters (2) mit der Bohrspindel (2) zumindest ein Kupplungsglied (6) vorgesehen ist, das formschlüssig in Kupplungsaufnahmen (8, 9) einerseits der Bohrspindel (1), andererseits des Futterkörpers (7) greift und dem Futterkörper (7) auf der Bohrspindel (1) ein axiales Verschiebungsspiel ermöglicht, das durch eine mindestens ein Sperrglied aufweisende Verriegelungsvorrichtung mit einem Kupplungsring (12) ein- und ausschaltbar ist, wozu das Sperrglied durch den axial verschiebbaren und gegen Drehung feststellbaren Kupplungsring (12) betätigbar ist und in zur Futterachse radialer Richtung in jeweils eine Sperrausnehmung verstellbar ist, wobei ferner der Kupplungsring (12) an seinem dem Stellring (20) zugewandten Rand mit Zähnen (21) versehen ist, die bei axial bohrerseitiger Stellung des Kupplungsringes (12) in eine zugeordnete Gegenverzahnung (22) des Stellrings (20) eingreifen, und wobei zwischen dem Futterkörper (7) und dem Kupplungsring (12) eine auf der Bohrspindel (1) befestigte Anschlaghülse (15) angeordnet ist, die an ihrer inneren Umfangsfläche einen Federring (19) trägt, der radial in eine Ringnut (11) des Futterkörpers (7) vorsteht und einen das axiale Verschiebungsspiel begrenzenden Anschlag für die beiden Seitenflächen (11.1, 11.2) der in der Breite dem Verschiebungsspiel angepaßten Ringnut (11) bildet, wobei die Sperrausnehmung als ein Ringfalz (50) an der Außenseite der Anschlaghülse (15) ausgebildet und eine am Futterkörper (7) zumindest axial festgelegte Sperrhülse (51) vorgesehen ist, die sich von der Bohrerseite des Bohrfutters her in den Ringraum zwischen der Anschlaghülse (15) und dem Kupplungsring (12) erstreckt und mindestens eine zur Bohrspindel (1) hin vorstehende Sperrzunge (52) aufweist, welche an der Innenseite das als radiale Sperrnase (10) ausgebildete Sperrglied trägt und in der axial bohrspindelseitigen Stellung des Kupplungsringes (12) in radial einwärts bewegter Stellung mit im Ringfalz (50) aufliegender Sperrnase (10) gehalten und in der axial bohrerseitigen Stellung des Kupplungsringes (12) radial auswärts bis zur Freigabe des Ringfalzes (50) durch die Sperrnase (10) bewegbar ist.

2. Schlagbohreinrichtung nach Anspruch 1, dadurch gekennzeichnet, daß die Sperrzunge (52) als aus der Sperrhülse (51) freigeschnittene, radial auswärts elastisch vorgespannte Federzunge ausgebildet ist und einem Stellvorsprung (53) des Kupplungsringes (12) anliegt.

3. Schlagbohreinrichtung nach Anspruch 1 oder 2, dadurch gekennzeichnet, daß die an der Sperrnase (10) zur Anlage kommende Ringfläche etwa als Kegelfläche ausgebildet und die ihr zugeordnete Anlagefläche der Sperrnase (10) entsprechend abgeschrägt ist.

4. Schlagbohreinrichtung nach einem der Ansprüche 1 bis 3, dadurch gekennzeichnet, daß zwischen der Sperrhülse (51) und dem Kupplungsring (12) ein Ringraum vorgesehen ist, in dem eine den Kupplungsring (12) in die axial bohrerseitige Stellung bewegende Feder (23) angeordnet ist, die axial zwischen einer Ringschulter (54) des Kupplungsringes (12) und einem Stützring (55) der Sperrhülse eingesetzt ist.

5. Schlagbohreinrichtung nach Anspruch 2, dadurch gekennzeichnet, daß der Stellvorsprung (53) durch einen in eine Ringnut des Kupplungsringes (12) eingelegten Federring gebildet ist.

6. Schlagbohreinrichtung nach den Ansprüchen 4 und 5, dadurch gekennzeichnet, daß der Kupplungsring (12) über den Stützring (55) und den die Stellvorsprünge (53) bildenden Federring an der Sperrhülse (51) geführt ist.

7. Schlagbohreinrichtung nach einem der Ansprüche 1 bis 6, dadurch gekennzeichnet, daß die Sperrzunge (52) in dreifacher, gleichmäßig über den Bohrfutterumfang verteilter Anordnung vorgesehen ist.

**Claims**

1. A hammer drilling apparatus comprising a drilling chuck (2) which can be driven by a drilling spindle (1) and which has an axial through passage (3) through which the hammer action of an anvil (4) which is axially guided in the hollow drilling spindle (1) can be transmitted to the end of the drill which is held in the drilling chuck (2) between chuck jaws (5) which are concentrically adjustable by an adjusting ring (20), wherein for non-rotatably connecting the drilling chuck (2) to the drilling spindle (1) there is provided at least one coupling member (6) which engages positively in coupling receiving means (8, 9) in the drilling spindle (1) on the one hand and the chuck body (7) on the other hand and permits the chuck body (7) to perform on the drilling spindle (1) an axial free motion which can be brought in and cut out by a locking device with a coupling ring (12), the locking device having at least one locking member, for which purpose the locking member is actuable by the coupling ring (12) which is axially displaceable and which can be prevented from rotating, and the locking member is displaceable in a radial direction relative to the axis of the chuck into a respective locking recess, wherein moreover the coupling ring (12) is provided at its edge towards the adjusting ring (20) with teeth (21) which, when the coupling ring (12) is in the position of being axially towards the drill, engage into an associated cooperating tooth arrangement (22) on the adjusting ring (20), and wherein disposed between the chuck body (7) and the coupling ring (12) is an abutment sleeve (15) which is fixed on the drilling spindle (1) and which at its inner peripheral surface carries a spring ring (19) which projects radially into an annular groove (11) in the chuck body (7) and forms an abutment for delimiting the axial free motion, for the two side surfaces (11.1, 11.2) of the annular groove (11) which is adapted in width to the free motion, wherein the locking recess is in the form of an annular rabbet (50) at the outside of the abutment sleeve (15) and there is provided a locking sleeve (51) which is at least axially fixed on the chuck body (7) and which extends from the drill side of the drilling chuck into the annular space between the abutment sleeve (15) and the coupling ring (12) and has at least one locking tongue (52), which locking tongue (52) projects towards the drilling spindle (1) and at the inward side carries the locking member in the form of a radial locking projection (10) and in the position of the coupling ring (12) which is axially towards the drilling spindle is held in a radially inwardly moved position with the locking projection (10) in a position of contact in the annular rabbet (50) while in the position of the coupling ring (12) in which it is axially towards the drill it is movable radially outwardly until the annular rabbet (50) is released by the locking projection (10).

2. A hammer drilling apparatus according to claim 1 characterised in that the locking tongue (52) is in the form of a radially outwardly resiliently biased spring tongue which is cut free from the locking sleeve (51), and bears against a positioning projection (53) on the coupling ring (12).

3. A hammer drilling apparatus according to claim 1 or claim 2 characterised in that the annular surface which comes to bear against the locking projection (10) is substantially in the form of a taper surface and the contact surface of the locking projection (10), which is associated therewith, is of a correspondingly inclined configuration.

4. A hammer drilling apparatus according to one of claims 1 to 3 characterised in that provided between the locking sleeve (51) and the coupling ring (12) is an annular space in which there is disposed a spring (23) which moves the coupling ring (12) into the position in which it is axially towards the drill, the spring (23) being disposed axially between an annular shoulder (54) on the coupling ring (12) and a support ring (55) on the locking sleeve.

5. A hammer drilling apparatus according to claim 2 characterised in that the positioning projection (53) is formed by a spring ring which is inserted into an annular groove in the coupling ring (12).

6. A hammer drilling apparatus according to claims 4 and 5 characterised in that the coupling ring (12) is guided on the locking sleeve (51) by way of the support ring (55) and the spring ring which forms the positioning projections (53).

7. A hammer drilling apparatus according to one of claims 1 to 6 characterised in that the locking tongue (52) is provided in a triple arrangement which is uniformly distributed around the periphery of the drilling chuck.

**Revendications**

1. Dispositif de perçage à percussion équipé d'un mandrin de serrage (2) pouvant être entraîné par une broche de perçage (1) et présentant un passage axial (3) par lequel le mouvement de percussion d'un percuteur (4) guidé axialement dans la broche de perçage creuse (1) peut être transmis à l'extrémité du foret lequel est maintenu dans le mandrin de serrage (2), entre des mâchoires de serrage (5) pouvant être déplacées concentriquement par une bague de réglage (20), la liaison rigide en rotation entre le mandrin de serrage (2) et la broche de perçage (1) étant réalisée par au moins un organe d'accouplement (6) qui s'engage positivement dans des logements d'accouplement (8, 9) sur la broche de perçage (1), d'une part, et sur le corps de mandrin (7), d'autre part, et qui autorise un jeu de déplacement axial du corps de mandrin (7) sur la broche de perçage (1) lequel peut être libéré et supprimé par un dispositif de verrouillage avec une bague d'accouplement (12) comprenant au moins un organe d'arrêt lequel peut être actionné par la bague d'accouplement (12), mobile dans le sens axial et pouvant être bloquée en rotation, et amené respectivement, dans la direction radiale par rapport à l'axe du mandrin, dans un évidement de blocage, la bague d'accouplement (12) comportant, en outre, sur son bord dirigé vers la bague de réglage (20), des dents (21) qui s'engrènent dans une denture conjuguée (22) associée de la bague de réglage (20) lorsque la bague d'accouplement (12) se trouve dans la position axiale du côté du foret, et une douille de butée (15) fixée sur la broche de perçage (1) étant disposée entre le corps de mandrin (7) et la bague d'accouplement (12) et portant sur sa surface circonférentielle intérieure une rondelle élastique (19) qui dépasse radialement dans une rainure annulaire (11) du corps de mandrin (7) et constitue une butée limitant le jeu de déplacement axial pour les deux surfaces latérales (11.1, 11.2) de la rainure annulaire (11) dont la largeur est adaptée au jeu de déplacement ; l'évidement de blocage étant conformé en rainure annulaire (50) sur la face extérieure de la douille de butée (15), et sur le corps de mandrin (7) étant prévue une douille d'arrêt (51) immobilisée au moins dans le sens axial qui s'étend à partir du côté foret du mandrin de serrage dans l'espace annulaire entre la douille de butée (15) et la bague d'accouplement (12) et présente au moins une languette d'arrêt (52) dépassant en direction de la broche de perçage (1) et portant sur la face intérieure l'organe d'arrêt conformé en taquet d'arrêt radial (10) et qui, dans la position axiale de la bague d'accouplement (12) du côté de la broche de perçage, est maintenue dans la position radialement intérieure, le taquet d'arrêt (10) reposant dans la rainure annulaire (50), et, dans la position axiale de la bague d'accouplement (12) du côté du foret, peut être déplacée radialement vers l'extérieur jusqu'à la libération de la rainure annulaire (50) par le taquet d'arrêt (10).

2. Dispositif de perçage à percussion selon la revendication 1, caractérisé par le fait que la languette d'arrêt (52) est conformée en lame flexible découpée dans la douille d'arrêt (51), avec précontrainte élastique radiale vers l'extérieur, et appliquée contre une saillie de réglage (53) de la bague d'accouplement (12).

3. Dispositif de perçage à percussion selon l'une des revendications 1 ou 2, caractérisé par le fait que la surface annulaire s'appliquant contre le taquet d'arrêt (10) est conformée approximativement en surface conique et que la surface d'appui du taquet d'arrêt (10) qui lui est associée est chanfreinée en conséquence.

4. Dispositif de perçage à percussion selon l'une quelconque des revendications 1 à 3, caractérisé par le fait qu'entre la douille d'arrêt (51) et la bague d'accouplement (12) est prévu un espace annulaire dans lequel est disposé un ressort (23) déplaçant la bague d'accouplement (12) dans la position axiale du côté du foret, ledit ressort (23) étant monté axialement entre un épaulement annulaire (54) de la bague d'accouplement (12) et une bague de support (55) de la douille d'arrêt.

5. Dispositif de perçage à percussion selon la revendication 2, caractérisé par le fait que l'élément de réglage en saillie (53) est constitué par une rondelle élastique placée dans une rainure annulaire de la bague d'accouplement (12).

6. Dispositif de perçage à percussion selon l'une des revendications 4 et 5, caractérisé par le fait que la bague d'accouplement (12) est guidée sur la douille d'arrêt (51) par l'intermédiaire de la bague de support (55) et de la rondelle élastique constituant les éléments de réglage en saillie (53).

7. Dispositif de perçage à percussion selon l'une quelconque des revendications 1 à 6, caractérisé par le fait que la languette d'arrêt (52) est prévue en une disposition triple avec répartition uniforme sur la circonférence du mandrin de serrage.

# Fig.1

# Fig.4

# Fig.3

Fig.2